# EUROPÄISCHE PATENTSCHRIFT

(11) **EP 1 940 710 B1**
(45) Veröffentlichungstag und Bekanntmachung des Hinweises auf die Patenterteilung: **06.04.2011**
(21) Anmeldenummer: 06775861.5
(22) Anmeldetag: 16.08.2006
(51) Int. Cl.: B65G 53/52, F16L 43/00, F16L 9/18, F16L 57/06

(54) **ROHRBOGEN UND VERFAHREN ZUR HERSTELLUNG EINES ROHRBOGENS**
ELBOW PIPE AND METHOD FOR PRODUCING AN ELBOW PIPE
COUDE DE TUBE ET PROCEDE POUR PRODUIRE UN COUDE DE TUBE

(30) Priorität: 27.10.2005 DE 102005051766
(43) Veröffentlichungstag der Anmeldung: 09.07.2008
(73) Patentinhaber: Esser -Werke GmbH & Co. KG, 59581 Warstein (DE)
(72) Erfinder: ESSER, Alexander, 59581 Warstein (DE)
(74) Vertreter: Griepenstroh, Jörg
(86) Internationale Anmeldenummer: PCT/DE2006/001432
(87) Internationale Veröffentlichungsnummer: WO 2007/048368

(56) Entgegenhaltungen:
- EP-A2- 0 414 589
- DE-A1- 4 010 556
- DE-A1- 10 143 290
- US-A- 5 188 396

## Beschreibung

Die Erfindung betrifft einen Rohrbogen für einen Rohrstrang zum fluidischen Transport von Feststoffen sowie ein Verfahren zur Herstellung eines solchen Rohrbogens.

Durch die DE 101 43 290 A1 ist ein Rohrbogen bekannt mit einem doppellagigen Rohrkörper, der aus einem Innenrohrbogen und einem Außenrohrbogen gebildet ist. Der Ringraum zwischen dem Innenrohrbogen und dem Außenrohrbogen kann mit einem Füllstoff als Druckausgleichsschicht verfüllt sein. Hierzu ist in die Wand des Außenrohrbogens eine Bohrung eingebracht, über welche die Befüllung des Spalts zwischen dem Innenrohrbogen und dem Außenrohrbogen vorgenommen wird. Die Bohrung wird anschließend gereinigt, zugeschweißt, geschliffen und überpoliert. Dies ist zeit- und kostenaufwändig. Auch stellt die Bohrung eine potentielle Schwachstelle in dem vergleichsweise dünnwandigen Außenrohrbogen dar.

Der Erfindung liegt ausgehend vom Stand der Technik die Aufgabe zugrunde, einen herstellungs- sowie sicherheitstechnisch verbesserten Rohrbogen zu schaffen und ein Verfahren zu dessen Herstellung aufzuzeigen.

Die Lösung des gegenständlichen Teils der Aufgabe besteht in einem Rohrbogen gemäß den Merkmalen von Anspruch 1.

Kernpunkt der Erfindung bildet die Maßnahme, dass der Innenrohrbogen eine Einfüllöffnung für den Füllstoff aufweist. Über die Einfüllöffnung kann der Ringraum zwischen dem Innenrohrbogen und dem Außenrohrbogen mit Füllstoff verfüllt werden. Eine Bohrung im Außenrohrbogen und die damit einhergehende Schwächung des druckfesten Außenrohrbogens wird vermieden. Auch eine aufwändige Reinigung und Nachbearbeitung des Außenrohrbogens ist nicht erforderlich.

Zweckmäßigerweise durchsetzt die Einfüllöffnung die Wand des Innenrohrbogens quer, wie dies Anspruch 2 vorsieht.

Eine besonders vorteilhafte Weiterbildung des grundsätzlichen Erfindungsgedankens zeigt Anspruch 3. Danach ist vorgesehen, dass die Einfüllöffnung am Innenradius des Innenrohrbogens angeordnet ist. Die Erfindung macht sich hierbei die Erkenntnis zu eigen, dass am Innenradius des Innenrohrbogens der geringste Verschleiß auftritt. Mithin wird die Einfüllöffnung im Innenrohrbogen in die Zone der geringsten Belastung gelegt.

Grundsätzlich können verschiedenartige Materialien als Füllstoff zur Anwendung gelangen. Der Füllstoff übernimmt die Funktion einer Druckausgleichsschicht, so dass sich der stoß- und schlagempfindliche Innenrohrbogen gut und möglichst flächig im Außenrohrbogen abstützt. Als besonders zweckmäßig wird Beton als Füllstoff erachtet (Anspruch 4).

Die Lösung des verfahrenstechnischen Teils der Aufgabe besteht in einem Verfahren mit den Maßnahmen von Anspruch 5. Danach wird zur Herstellung eines erfindungsgemäßen Rohrbogens der Innenrohrbogen sowie der Außenrohrbogen und die Kupplungsbunde einschließlich etwaiger in die Kupplungsbunde integrierter Verschleißringe zum Rohrkörper zusammengesetzt. Die Kupplungsbunde werden mit dem Außenrohrbogen verschweißt. Anschließend werden Zentrierhilfen jeweils endseitig in den Rohrkörper eingeführt und der Innenrohrbogen und der Außenrohrbogen mittels der Zentrierhilfen relativ zueinander positioniert. Danach wird der Ringraum zwischen dem Innenrohrbogen und dem Außenrohrbogen über eine in den Rohrkörper eingeführten und an eine Einfüllöffnung in der Wand des Innenrohrbogens angesetzte Befüllungseinrichtung mit Füllstoff verfüllt.

Diese Vorgehensweise ist rationell und ermöglicht eine Befüllung des Ringraums von der Innenseite des Rohrbogens her. Aufwendige Nacharbeiten oder auch eine Reinigung des Innenrohrbogens sind nicht erforderlich.

Während der Befüllung sorgen die Zentrierhilfen für eine Lageorientierung des Innenrohrbogens im Außenrohrbogen. Die Zentrierhilfen bleiben auch nach Beendigung des Füllvorgangs noch so lange aktiv, bis die Verfestigung bzw. Aushärtung des Füllstoffes so weit fortgeschritten ist, das der Innenrohrbogen zuverlässig im Außenrohrbogen fixiert ist.

Gemäß der Maßnahme von Anspruch 6 ist vorgesehen, dass die Zentrierhilfen zum Positionieren des Innenrohrbogens und des Außenrohrbogens aufgebläht werden. Hierzu besitzen die Zentrierhilfen einen pneumatisch oder hydraulich betätigbaren Blähkörper, beispielsweise in Form einer Gummimanschette. Durch Betätigung der Blähkörper der Zentrierhilfen wird der Innenrohrbogen im Außenrohrbogen positioniert und während des Füllvorgangs gehalten. Gleichzeitig übernehmen die Zentrierhilfen bzw. deren Blähkörper eine Abdichtfunktion an den Rohrenden des Rohrbogens. Hierbei wird insbesondere der Spalt zwischen dem Innenrohrbogen und dem inneren Verschleißring des Kupplungsbundes durch die Blähkörper abgedichtet.

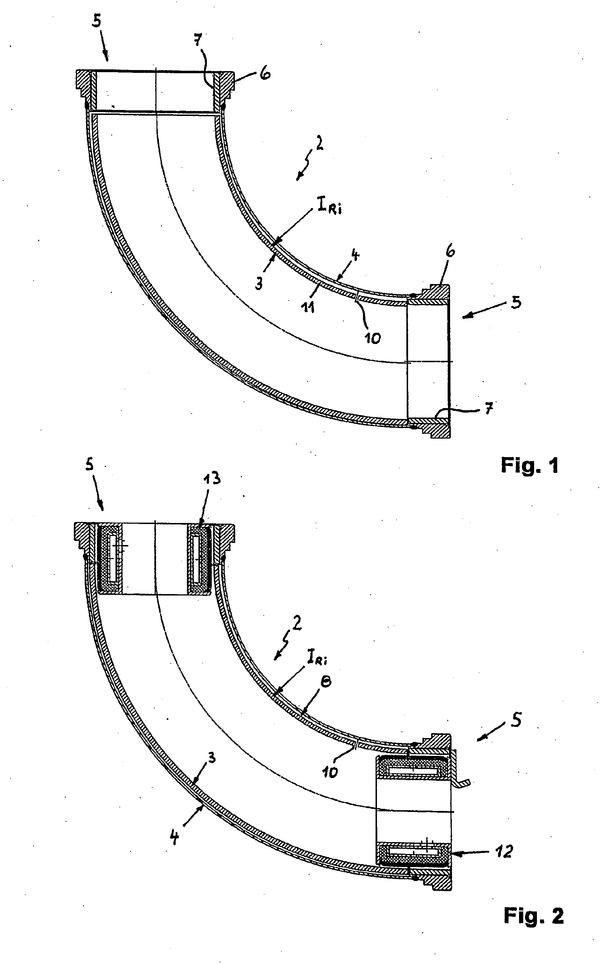

Ein erfindungsgemäßer Rohrbogen und dessen Herstellung ist nachfolgend anhand der beigefügten Zeichnungen näher beschrieben. Die Figuren 1 bis 6 zeigen den Herstellvorgang eines Rohrbogens in verschiedenen Schritten.

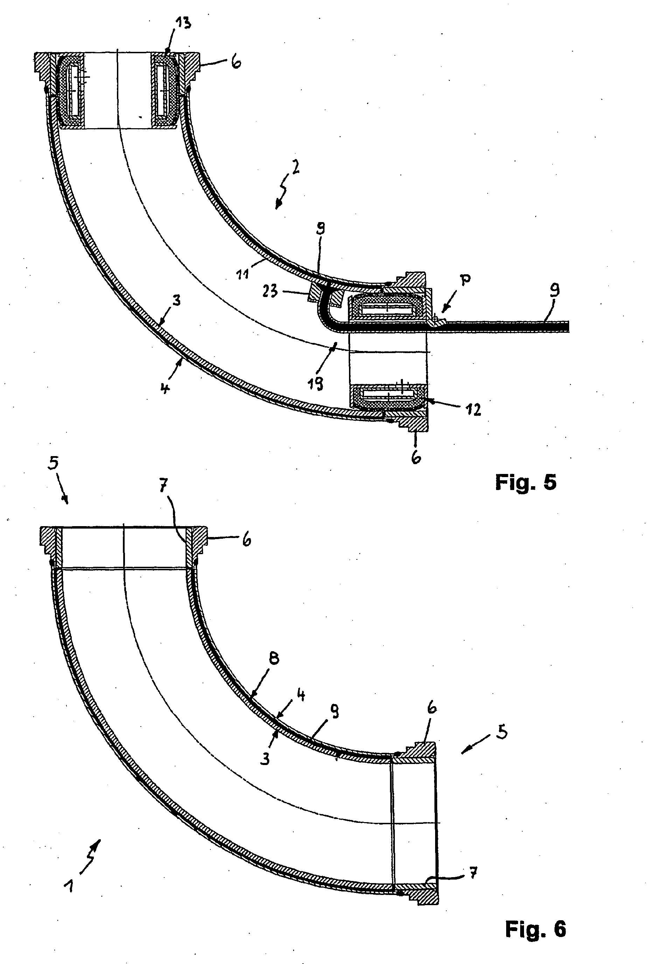

Ein fertiger Rohrbogen 1 ist in der Figur 6 dargestellt. Der Rohrbogen 1 kommt innerhalb eines Rohrstrangs zum fluidischen Transport von Feststoffen zum Einsatz, beispielsweise im Verteilermast von Autobetonpumpen.

Wie insbesondere in Figur 2 zu erkennen, besitzt der Rohrbogen 1 einen doppellagigen Rohrkörper 2, bestehend aus einem hochverschleißfesten gehärteten Innenrohrbogen 3 und einem druckfesten schweißbaren Außenrohrbogen 4. An jedem Rohrende 5 des Rohrkörpers 2 ist ein Kuplungsbund 6 festgelegt. Die Kupplungsbunde 6 umschließen jeweils einen inneren Verschleißring 7 und sind mit dem Außenrohrbogen 4 verschweißt.

Der Ringraum 8 zwischen dem Innenrohrbogen 3 und dem Außenrohrbogen 4 ist mit Beton als Füllstoff 9 verfüllt. Zur Einleitung des Füllstoffs 9 ist am Innenradius I_{Ri} des Innenrohrbogens 3 eine Einfüllöffnung 10 vorgesehen, welche die Wand 11 des Innenrohrbogens 3 quer durchsetzt (siehe hierzu auch Figuren 1 bis 5).

Zur Herstellung des Rohrbogens 1 werden Innenrohrbogen 3, Außenrohrbogen 4 sowie die Kupplungsbunde 6 unter Eingliederung der Verchleißringe 7 zum Rohrkörper 2 zusammengesetzt. Hierzu wird üblicherweise zunächst ein Kupplungsbund 6 einschließlich des Verschleißrings 7 an einem Rohrende 5 des Außenrohrbogens 4 befestigt und verschweißt. Anschließend wird der Innenrohrbogen 3 in den Außenrohrbogen 4 eingeführt und der Kupplungsbund 6 am anderen Rohrende 5 montiert.

Figur 1 zeigt den unbefüllten Rohrkörper 2. Der Innenrohrbogen 3 liegt lose im Außenrohrbogen 4.

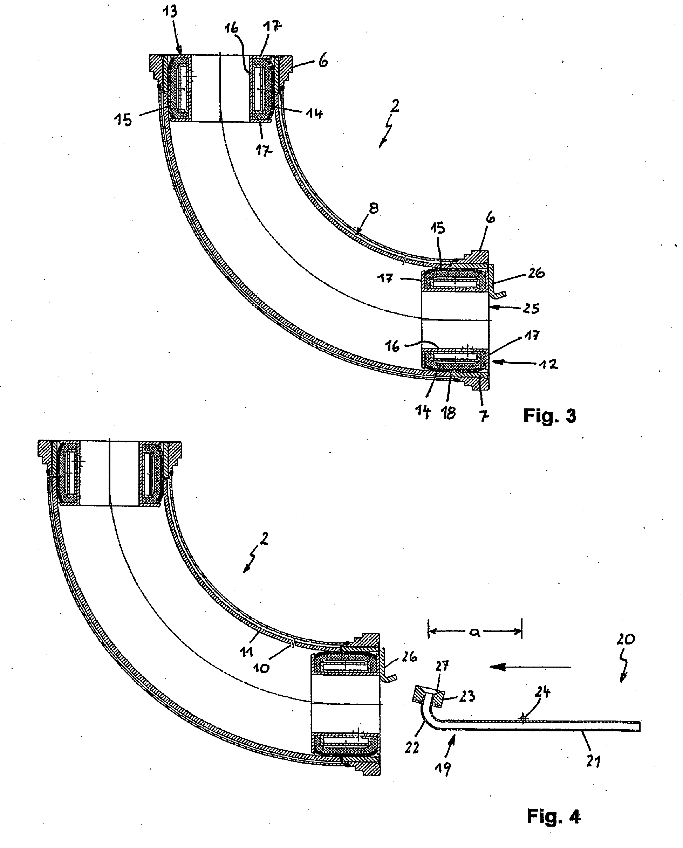

Anschließend werden Zentrierhilfen 12 bzw. 13 jeweils endseitig in den Rohrkörper 2 eingeführt und der Innenrohrbogen 3 im Außenrohrbogen 4 zentriert (Figur 2). Hierzu besitzt jede Zentrierhilfe 12, 13 einen aufblasbaren Blähkörper 14 mit einer radial umlaufenden Dichtmanschette 15.Die Blähkörper 14 sind auf einer zentralen Hülse 16 mit seitlich umlaufenden Stützkränzen 17 angeordnet. Durch Aufblähen des Blähkörpers 14 wird der Innenrohrbogen 3 im Außenrohrbogen 4 positioniert und fixiert. Des Weiteren wird der Spalt 18 zwischen dem Innenrohrbogen 3 und den vorgesetzten Verschleißringen 7 abgedichtet (Figur 3).

Danach wird eine Füllpistole 19 einer Befüllungseinrichtung 20 - wie in Figur 4 ersichtlich - in den Rohrkörper 2 eingeführt. Die Füllpistole 19 weist ein geradlinig verlaufendes Zuführrohr 21 mit einem endseitigen Bogenabschnitt 22 und einem Füllkopf 23 auf. Zur Befüllung des Ringraums 8 zwischen Innenrohrbogen 3 und Außenrohrbogen 4 wird der Füllkopf 23 der Füllpistole 19 an die Einfüllöffnung 10 im Innenrohrbogen 3 angesetzt. Am Zuführrohr 21 ist in einem definierten Abstand a zum Füllkopf 23 ein Gelenkbolzen 24 vorgesehen. Zur Fixierung der Füllpistole 19 und zur Erzeugung einer Andrückkraft am Füllkopf 23 wird die Füllpistole 19 mit dem Gelenkbolzen 24 in einen an der freien Stirnseite 25 der Zentrierhilfe 12 vorgesehenen Hakenkörper 26 eingehängt. Hakenkörper 26 und Gelenkbolzen 24 bilden eine Drehpunkt-Lagerung P. Durch Hebelwirkung kann eine ausreichend hohe Andrückkraft am Füllkopf 23 erzeugt werden, so dass eine zuverlässige Befüllung des Ringraums erfolgen kann. Der Abstand a zwischen Füllkopf 23 und Gelenkbolzen 24 ist so bemessen, dass der Füllkopf 23 bei in den Hakenkörper 26 eingehängtem Gelenkbolzen 24 die Einfüllöffnung 10 am Innenradius I_{Ri} des Innenrohrbogens 3 trifft. Um dies zu erleichteren weist der Füllkopf 23 ausströmseitig einen sich trichterförmig erweiternden Auslass 27 auf.

Der Füllvorgang ist in Figur 5 dargestellt. Der Füllstoff fließt durch die Füllpistole 19 über den Füllkopf 23 durch die Einfüllöffnung 10 in den Ringraum 8 zwischen Innenrohrbogen 3 und Außenrohrbogen 4 und füllt diesen aus. Hierbei wird der Ringraum 8 vollständig mit Füllstoff 9 ausgefüllt, so dass der Innenrohrbogen 3 flächig im Außenrohrbogen 4 abgestützt wird.

Nach Beendigung des Füllvorgangs bleiben die Zentrierhilfen 12, 13 noch so lange in Position, bis der Füllstoff 9 so weit abgebunden und ausgehärtet ist, dass es zu keiner Lageveränderung des Innenrohrbogens 3 im Außenrohrbogen 4 mehr kommt.

Einen fertigen Rohrbogen 1 zeigt, wie eingangs gesagt, die Figur 6.

### Bezugszeichen:

- 1-: Rohrbogen
- 2-: Rohrkörper
- 3-: Innenrohrbogen
- 4-: Außenrohrbogen
- 5-: Rohrende
- 6-: Kupplungsbund
- 7-: Verschleißring
- 8-: Ringraum
- 9-: Füllstoff
- 10-: Einfüllöffnung
- 11 -: Wand v. 3
- 12-: Zentrierhilfe
- 13-: Zentrierhilfe
- 14-: Blähkörper
- 15-: Dichtmanschette
- 16-: Hülse
- 17-: Stützkranz
- 18-: Spalt
- 19-: Füllpistole
- 20 -: Befüllungseinrichtung
- 21-: Zuführrohr
- 22-: Bogenabschnitt
- 23-: Füllkopf
- 24-: Gelenkbolzen
- 25-: Stirnseite v. 12
- 26-: Hakenkörper
- 27-: Auslass

- I_{Ri}-: Innenradius v. 3
- a-: Abstand
- P-: Drehpunkt-Lagerung

## Patentansprüche

1. Rohrbogen für einen Rohrstrang zum fluidischen Transport von Feststoffen, welcher einen doppellagigen Rohrkörper (2) bestehend aus einem Innenrohrbogen (3) und einem Außenrohrbogen (4) aufweist, wobei an jedem Rohrende (5) des Rohrkörpers (2) ein Kupplungsbund (6) festgelegt ist und der Ringraum (8) zwischen dem Innenrohrbogen (3) und dem Außenrohrbogen (4) mit einem Füllstoff (9) verfüllt ist, **dadurch gekennzeichnet, dass** der Innenrohrbogen (3) eine Einfüllöffnung (10) für den Füllstoff (9) aufweist.

2. Rohrbogen nach Anspruch 1, **dadurch gekennzeichnet, dass** die Einfüllöffnung (10) die Wand (11) des Innenrohrbogens (3) quer durchsetzt.

3. Rohrbogen nach Anspruch 1 oder 2, **dadurch gekennzeichnet, dass** die Einfüllöffnung (10) am Innenradius (I_{Ri}) des Innenrohrbogens (3) angeordnet ist.

4. Rohrbogen nach wenigstens einem der Ansprüche 1 bis 3, **dadurch gekennzeichnet, dass** der Füllstoff (9) Beton ist.

5. Verfahren zur Herstellung eines Rohrbogens, welcher einen doppellagigen Rohrkörper (2) bestehend aus einem Innenrohrbogen (3) und einem Außenrohrbogen (4) aufweist, wobei an jedem Rohrende (5) des Rohrkörpers (2) ein Kupplungsbund (6) festgelegt ist und der Ringraum (8) zwischen dem Innenrohrbogen (3) und dem Außenrohrbogen (4) mit einem Füllstoff (9) verfüllt ist, **dadurch gekennzeichnet, dass** der Innenrohrbogen (3) und der Außenrohrbogen (4) sowie die Kupplungsbunde (6) zu einem Rohrkörper (2) zusammengesetzt werden, wonach Zentrierhilfen (12, 13) jeweils endseitig in den Rohrkörper (2) eingeführt und der Innenrohrbogen (3) und der Außenrohrbogen (4) relativ zueinander positioniert werden und danach der Ringraum (8) zwischen dem Innenrohrbogen (3) und dem Außenrohrbogen (4) mittels einer in den Rohrkörper (2) eingeführten und an eine Einfüllöffnung (10) in der Wand (11) des Innenrohrbogens (3) angesetzten Befüllungseinrichtung (20) mit einem Füllstoff (9) verfüllt wird.

6. Verfahren nach Anspruch 5, **dadurch gekennzeichnet, dass** die Zentrierhilfen (12, 13) zum Positionieren des Innenrohrbogen (3) und des Außenrohrbogens (4) aufgebläht werden.

## Claims

1. Pipe bend for the fluidic transport of solid materials, which has a double layer tubular body (2) consisting of an inner pipe bend (3) and an outer pipe bend (4) whereby a coupling flange (6) is fitted at each pipe end (5) of the pipe body (2) and the annulus chamber (8) between the inner pipe bend (3) and the outer pipe bend (4) is filled with a filler material (9), **characterized in that** the inner pipe bend (3) has a filler-hole (10) for the filler material (9).

2. Pipe bend **characterized in that** the filler-hole (10) passes transversely through the wall (11) of the inner pipe bend (3).

3. Pipe bend as per Claim 1 or 2 **characterized in that** the filler-hole is located on the inner radius (IRT) of the inner pipe bend (3).

4. Pipe bend as per at least one of the Claims 1 to 3 **characterized in that** the filler material (9) is concrete.

5. Process for the production of a pipe bend, which has a double layer tubular body (2) consisting of an inner pipe bend (3) and an outer pipe bend (4) whereby a coupling flange (6) is fitted at each pipe end (5) of the pipe body (2) and the annulus chamber (8) between the inner pipe bend (3) and the outer pipe bend (4) is filled with a filler material (9), **characterized in that** the inner pipe bend (3) and the outer pipe bend (4) and the coupling flange (6) are combined on a tubular body(2), whereupon centring aids (12,13) are inserted at their ends into the tubular body (2) and the inner pipe bend (3) and the outer pipe bend (4) are positioned in relation to each other and the thereafter the annulus chamber (8) between the inner pipe bend (3) and the outer pipe bend (4) is filled with a filler material (9) by means of a filling device (20) that is inserted into the tubular body (2) and of a filler-hole (10) located in the wall (11) of the inner pipe bend (3).

6. Process as per Claim 5 **characterized in that** the centring aids (12.13) for the positioning of the inner pipe bend (3) and the outer pipe bend 4 are inflated.

## Revendications

1. Coude de tube pour un réseau de tubes destiné au transport fluidique de matières solides, lequel comprend un corps tubulaire à deux couches (2) constitué d'un coude de tube intérieur (3) et d'un coude de tube extérieur (4), dans lequel une collerette de couplage (6) est solidarisée à chaque extrémité (5) du corps tubulaire (2) et l'espace annulaire (8) entre le coude de tube intérieur (3) et le coude de tube extérieur (4) est rempli d'un matériau de remplissage (9),
**caractérisé en ce que** le coude de tube intérieur (3) présente une ouverture de remplissage (10) pour le matériau de remplissage (9).

2. Coude de tube selon la revendication 1, **caractérisé en ce que** l'ouverture de remplissage (10) traverse perpendiculairement la paroi (11) du coude de tube intérieur (3).

3. Coude de tube selon la revendication 1 ou 2, **caractérisé en ce que** l'ouverture de remplissage (10) est agencé au niveau du rayon intérieur (I_{Ri}) du coude de tube intérieur (3).

4. Coude de tube selon l'une au moins des revendications 1 à 3, **caractérisé en ce que** le matériau de remplissage (9) est du béton.

5. Procédé pour la fabrication d'un coude de tube, lequel comprend un corps tubulaire à deux couches (2) constitué d'un coude de tube intérieur (3) et d'un coude de tube extérieur (4), dans lequel une collerette de couplage (7) est solidarisée à chaque extrémité (5) du corps tubulaire (2) et l'espace annulaire (8) entre le coude de tube intérieur (3) et le coude de tube extérieur (4) est rempli d'un matériau de remplissage (9),
**caractérisé en ce que** le coude de tube intérieur (3) et le coude de tube extérieur (4) ainsi que les collerettes de couplage (6) sont regroupés pour former un corps tubulaire (2), suite à quoi des accessoires de centrage (12, 13) sont introduits respectivement aux extrémités dans le corps tubulaire (2), et le coude de tube intérieur (3) et le coude de tube extérieur (4) sont positionnés l'un par rapport à l'autre, et ensuite l'espace annulaire (8) entre le coude de tube intérieur (3) et le coude de tube extérieur (4) est rempli avec un matériau de remplissage (9) au moyen d'un système de remplissage (20) appliqué à une ouverture de remplissage (10) dans la paroi (11) du coude de tube intérieur (3).

6. Procédé selon la revendication 5, **caractérisé en ce que** les accessoires de centrage (12, 13) sont gonflés pour positionner le coude de tube intérieur (3) et le coude de tube extérieur (4).
